Europäisches Patentamt

European Patent Office

Office européen des brevets

(11) Publication number: **0 603 604 A1**

# EUROPEAN PATENT APPLICATION

(21) Application number: **93119422.9**

(22) Date of filing: **02.12.93**

(51) Int. Cl.⁵: **G02B 6/44**

(30) Priority: **08.12.92 NO 924734**

(43) Date of publication of application:
**29.06.94 Bulletin 94/26**

(84) Designated Contracting States:
**DE DK FR GB IT NL SE**

(71) Applicant: **ALCATEL KABEL NORGE AS**
**Oestre Aker vei 33**
**N-0509 Oslo(NO)**

(72) Inventor: **Balog, Georg Endre**
**Martinshaugen 116**
**N-3408 Tranby(NO)**
Inventor: **Pedersen, Jack Raymond**
**Festeveien 8**
**N-1500 Moss(NO)**

(74) Representative: **Pohl, Herbert, Dipl.-Ing et al**
**Alcatel SEL AG**
**Patent- und Lizenzwesen**
**Postfach 30 09 29**
**D-70449 Stuttgart (DE)**

(54) **Fiber optic element.**

(57) This invention relates to a fiber optic element which is suitable for installation within a power cable to constitute a composite cable. The element (10,20,30,40,50,60) may be arranged between the outer layers of the power cable and comprises at least one fiber compartment (44) within which at least one fiber can be oscillated to provide a fiber overlength. The element includes a lid part (42) and a bottom part (41). The lid part may be hinged to a bottom part of the element. The lid part (42) is snappable onto the bottom part (41) without interfering with the interior of the compartment (44). The element may also be installed in other environments.

Fig.5

EP 0 603 604 A1

The present invention relates to a fiber optic element which is suitable for installation within a power cable to constitute a composite cable similar to that defined in our Norw Patent Application No 914282 (G Berthelsen 2-10-2).

The power cable comprises a single core power cable having a central power conductor and one or more layers of insulation material, as well as an outer metal screen and corrosion protection.

The fiber element is inserted into the power cable in a stable position between the metal screen and the armouring during manufacture of the power cable by applying the fiber element under or within a buffer sheath in parallel with the cable axis.

The object of the invention is to provide alternatives to the embodiments suggested in said Norw. patent application. The main features of the invention are defined in the claims.

With this invention there is provided a fiber element which can be wound on reels or stored in long lengths, - in excess of 10 kilometers, - and which can be inserted into the power cable without interfering with the cable armouring or sheathing process.

Above mentioned and other features and objects of the present invention will clearly appear from the following detailed description of embodiments of the invention taken in conjunction with the drawings, where

Figure 1 shows a power cable for which the invention is applicable,

Figure 2 shows where a fiber optic element is inserted,

Figures 3 - 7 show five embodiments of the element, and

Figure 8 shows a sine curve followed by a fiber.

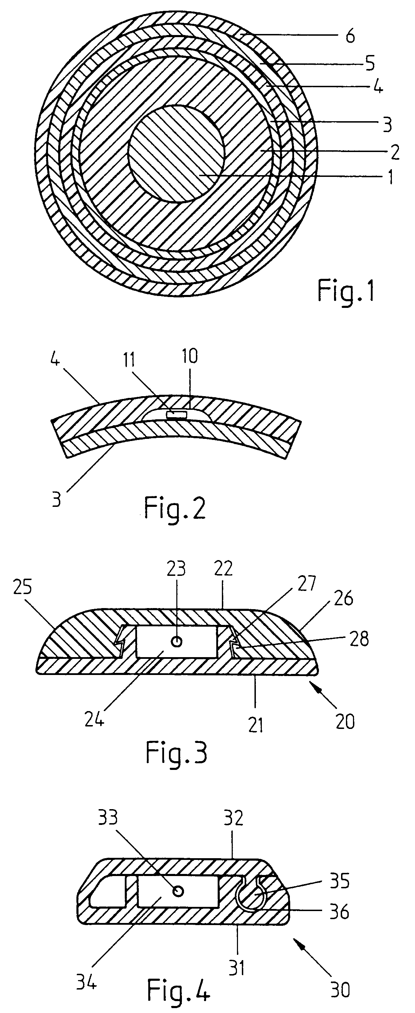

Figure 1 schematically illustrates the principles of the invention in connection with a single core power cable having a conductor 1, a semiconducting layer (not shown), one or more layers of insulation material 2, a metal screen 3 which can be a lead sheath and which may include a semiconducting layer (not shown), a first corrosion protecting layer 4 such as wound layers or an extruded plastic sheath, conventional (metal or synthetic) armour 5 and a conventional second corrosion protecting layer 6. The fiber optic element should be arranged at the interface between layers 3 and 4 as described below, in connection with various embodiments of the invention. At least some of the optical fibers can be constituted by a fiber ribbon or band.

In Figure 2 is schematically illustrated a section of a composite cable having a metal screen 3 and a plastic sheath 4, where an optical fiber element 10 is arranged within the plastic sheath 4. The element 10 is provided with a compartment 11 within which an optical fiber (not shown) is situated.

The fiber element 10 is arranged in parallel with the cable axis on top of the metal screen or on a taping (not shown) over the metal screen. A thin tape, string or the like (not shown) may be spun around the cable and fiber element 10 in order to keep the element in place before entering an extruder for the plastic sheath 4, or a winding machine for alternative plastic layers 4.

The element 10 should have no sharp edges pointing into the plastic sheath 4 and its upper corners should be rounded in order to prevent tearing of the plastic sheath. There is no need to provide a special slot in the plastic sheath for accommodating the fiber element. The plastic sheath will fully cover the element.

In Figures 3 to 7 are illustrated five alternative fiber elements. The element can be made from extruded polypropylene or high density polyethylene. The elements shown in the drawings are not drawn to correct scale.

The element 20 of Figure 3 consists of two parts, a bottom part 21 and a lid part 22 which may be snapped over the bottom part. These parts may be extruded in separate operations. A fiber 23 is installed within the element by placing the bottom part 21 horizontally, filling the compartment 24 with a compound such as petroleum jelly and oscillating the fiber 23 along a sine curve into the filled compartment. Finally the lid 22 is snapped on to close the compartment.

The details of the snapping arrangement 27,28 should be such that the lid is locked onto the bottom part. As an alternative to oscillating the fiber into the bottom part, the oscillation and overlength of the fiber can be obtained by stretching the bottom part during installation of a straight fiber into the compartment, so that when the stretch is released, the fiber will have the necessary overlength. The fiber optic element is now complete and can be transported to the power cable machine (not shown).

The element 20 should be placed with the bottom side 21 against the cable screen 3, so that the lid 22 will be covered with the sheath 4. The lid should have rounded edges 25,26.

The element 30 shown in Figure 4 is a folded element and it is shown in its folded mode. This element also has a bottom part 31 and a lid part 32. The lid is hinged to the bottom part as illustrated. The process of installing a fiber 33 within the compartment 34 is similar to that described in connection with Figure 3. The compartment 34 is filled with a compound before arranging the fiber and snapping a lid part 35 into a slot 36.

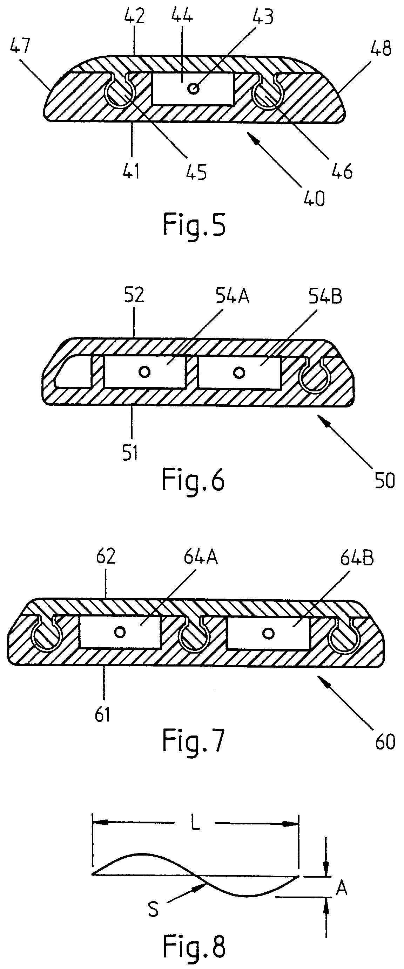

In Figure 5 an element 40 is shown as having a bottom part 41 and a snap-on lid 42 defining a compartment 44 for a fiber 43. The lid is provided with two snap elements 45 and 46 fitting into corresponding slots in the bottom part. The side edges 47 and 48 are rounded so that the external sheath or winding 4 will smoothly fit over the fiber element leaving only negligible space between the sheath and the element.

In Figures 6 and 7 are schematically illustrated fiber optic elements 50 and 60 each having two fiber compartments 54A,54B and 64A,64B respectively. The compartments are made up of bottom parts 51,61 and lid parts 52,62 respectively. The installation of the fibers and closing of the lids will be as described in connection with Figures 3-5.

It is important that the fiber is well within the compartment before snapping on the lid, so as not to harm the fiber. It is also important that the lid and bottom parts are so formed that the fiber cannot be caught between the inner edges of these parts if the element is bent or twisted.

The fiber compartment could have a rectangular shape with a height/width ratio of at least 1:2. The compartment should preferably have a height of 0.5 - 1 mm and a width of 1 - 3 mm. An element may contain more than one compartment as illustrated in Figures 6-7, and each compartment may contain more than one fiber.

A single compartment element should have outer dimensions in the order of 5 to 15 mm. At least two of the outer edges of the element should be rounded. The edges of the lid part could be rounded with a radius of some 5 mm.

As will be understood from the above, the proposed construction requires that the fiber, which is a fiber having a diameter of some 0.25 mm and which is not encompassed with a steel tube, must have a certain overlength.

The magnitude of the overlength required is decided from two factors:

a) the diameter of the cable, - or rather the radius at which the fiber element is arranged within the power cable, and

b) the smallest bending radius which is allowed for the power cable. This radius also determines the diameter of reels, drums and the like, on which the cable can be wound or the diameter of pay-off wheels over which the cable must be passed.

The factor b) is most important as the relevant bending radius of the cable can be 2.5m or 5m, whereas the cable diameter will be in the order of 10 to 20 mm and therefore will be negligible compared to the bending radius.

With a cable with a minimum bending radius of 2.5 m, the fiber should have an overlength of 2 %. An overlength of 2 % would call for a compartment width of at least 5 mm when the wavelength of the oscillated fiber is 58 mm.

The overlength of the fiber is obtained by oscillating the fiber within the compartment. The frequency and amplitude of the oscillations are limited by the minimum bending radius of the fiber which by way of example can be set to be Rmin = 30mm.

In Figure 8, L = the length along the axis for one wave length, A = the amplitude of the fiber sine wave, and S = the length of the sine curvature for that wavelength. The minimum width Wmin of the compartment should be 2A and the overlength will be S minus L or S/L %.

The following table can be made to illustrate the situation:

| S/L (%) | 1 | 1.5 | 2 | 2.5 | 3 |
|---|---|---|---|---|---|
| L/A | 31 | 26 | 23 | 20 | 18 |
| Wmin(mm) | 2.5 | 3.5 | 4.6 | 5.9 | 7.3 |

Example:

By taking the width of the compartment as W = 5mm for an overlength S/L of 2%, the table gives L/A = 22 and the length of one wavelength L = 58mm. The bending radius of the fiber can then be calculated to be R = $L^2/(2n)^2 xA$ = 30mm which should be just acceptable.

With such a construction the optical fiber will be free from any mechanical stress as all such stress is taken up by the walls of the compartment.

Whereas the defined fiber optic element is designed especially for installation within the outer layers of a power cable, it will also be suitable for installation in other environments, such as within other cables and within conduits and ducts. For wall installation in buildings, the lower side of the bottom part can be provided with an adhesive tape (not shown).

3

The above detailed description of embodiments of this invention must be taken as examples only and should not be considered as limitations on the scope of protection.

## Claims

1. Fiber optic element suitable for installation within a power cable, in parallel with the cable axis, - or in other environments, **characterized in that** the element (10,20,30,40,50,60) comprises at least one fiber compartment (11,24,34,44,54A,54B,64A,64B) within which at least one fiber can be oscillated to provide a fiber over-length.

2. Element according to claim 1, **characterized in that** the element includes a lid part (22,32,42,52,62) and a bottom part (21,31,41,51,61).

3. Element according to claim 2**, characterized in that** the lid part (32,52) is hinged to a bottom part (31,51) of the element.

4. Element according to claim 2 or 3, **characterized in that** the lid part (22,32,42,52,62) is snappable onto the bottom part (21,31,41,51,61) without interfering with the interior of the compartment (24,34,44,54A,54B,64A,64B).

5. Element according to any of the above claims, **characterized in that** the fiber compartment (11,24,34,44,54A,54B,64A,64B) has a rectangular crossection with a height/width ratio of at least 1:2.

6. Element according to any of the above claims, **characterized in that** the compartment has a height of 0.5 - 1 mm and a width of 1 - 3 mm.

7. Element according to any of the above claims, **characterized in that** a single compartment element has outer dimensions in the order of 5 to 15 mm.

8. Element according to any of the above claims, **characterized in that** at least two (25,26;47,48) of the outer edges of the element are rounded.

9. Element according to claim 8, **characterized in that** the edges (25,26;47,48) of the lid part (22,32,42) is rounded with a radius of some 5 mm.

10. Element according to any of the above claims, **characterized in that** the element is made from extruded polypropylene or high density polyethylene.

Fig.1

Fig.2

Fig.3

Fig.4

42  44  43

47  48

41  45  46

40

Fig.5

52  54A  54B

51

Fig.6

50

62  64A  64B

61

Fig.7

60

L

S  A

Fig.8

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | GB-A-1 506 967 (INTERNATIONAL STANDARD ELECTRIC) <br> * claim 3; figure 1 * | 1 | G02B6/44 |
| X | DE-A-29 02 576 (FELTEN & GUILLEAUME) <br> * claim 1; figure 13 * | 1 | |
| A | DE-A-41 28 935 (SIEMENS) <br> * abstract; figures 1-6 * | 1,2,4,5 | |
| A | * page 3, line 31-45 * | 10 | |
| A | FR-A-2 562 272 (SOCIETE DE CABLES POUR L'ELECTRONIQUE ET LA TELECOMMUNICATION-CABELTEL) <br> * page 7, line 12-19; figures 1,2 * | 1,2,5 | |
| A | EP-A-0 454 345 (AMERICAN TELEPHONE AND TELEGRAPH COMPANY) <br> * abstract * | 4 | |
| A | DE-A-25 09 547 (SIEMENS) <br> * page 4, last paragraph * | 10 | TECHNICAL FIELDS SEARCHED (Int.Cl.5) <br><br> G02B |

The present search report has been drawn up for all claims

| Place of search | Date of completion of the search | Examiner |
|---|---|---|
| BERLIN | 18 March 1994 | Fuchs, R |